# EUROPEAN PATENT SPECIFICATION

(11) **EP 2 947 392 B1**
(45) Date of publication and mention of the grant of the patent: **26.06.2019**
(21) Application number: 13870571.0
(22) Date of filing: 14.05.2013
(51) Int. Cl.: F24D 3/00, F24F 5/00, F24D 11/00, F24D 19/10

(54) **MULTIPLE TEMPERATURE SYSTEM**
MEHRFACHTEMPERATURSYSTEM
SYSTÈME À TEMPÉRATURES MULTIPLES

(30) Priority: 10.01.2013 JP 2013002996
(43) Date of publication of application: 25.11.2015
(73) Proprietor: Mitsubishi Electric Corporation, Tokyo 100-8310 (JP)
(72) Inventor: FUJITSUKA, Masashi, Tokyo 100-8310 (JP); TSUCHINO, Kazunori, Tokyo 1008310 (JP)
(74) Representative: Sajda, Wolf E.
(86) International application number: PCT/JP2013/063467
(87) International publication number: WO 2014/109079

(56) References cited:
- DE-A1- 3 724 661
- JP-A- H0 688 626
- JP-A- S6 317 318
- JP-A- H05 180 450
- JP-A- H08 261 486
- JP-A- H09 318 083
- JP-A- 2005 201 618
- JP-A- 2006 057 986
- JP-A- 2012 013 358
- JP-A- 2012 013 358

## Description

### Technical Field

The present invention relates to a multiple temperature system which, in supplying a heat medium of heating energy or cooling energy to each of a plurality of heat demand portions from a single heat supply portion, generates and supplies heat media having a plurality of different temperatures for the respective heat demand portions.

### Background Art

Hitherto, a system configuration is disclosed in which low temperature water which circulates from an outlet side of a floor heater to an inlet side of the floor heater and high temperature water supplied from a heat source to the floor heater are mixed by a pump, and the water mixture is adjusted in temperature and then supplied to the floor heater.

In addition, it is disclosed that in this system, when any one of a plurality of floor heaters is not used, a proportional control valve mounted on a circulation water flow passage to each floor heater is operated, and a flow rate of the pump is reduced, thereby reducing pump power (see Patent Literature 1).

Also, a system configuration is disclosed which includes a pump which circulates hot water through a terminal radiator, a heater which heats hot water, and a water quantity regulating valve which does not pass through the heater, and in which high temperature water heated by the heater and low temperature water having passed through the water quantity regulating valve are mixed, and the water mixture is adjusted in temperature and then supplied to the terminal radiator.

In addition, it is disclosed that in this system, a rotation speed of the pump is changed in accordance with a regulated amount of the water quantity regulating valve (see Patent Literature 2).

### List of Citations

### Patent Literature

Patent Literature 1: Japanese Unexamined Patent Application Publication JP 2005-201 618 A (e.g., see [0022] to [0031], [0038], and FIG. 1)
Patent Literature 2: Japanese Unexamined Patent Application Publication JP 2005-156 100 A (e.g., see [0020] to [0032], [0038], FIG. 1, and FIG. 2)

### Summary of the Invention

### Technical Problem

In both Patent Literature 1 and Patent Literature 2, a mixture ratio between low temperature water and high temperature water as a heat medium is changed to create a predetermined temperature by adjusting the opening degree of a thermal valve (the water quantity regulating valve in Patent Literature 2) connected as a flow passage in series with the pump, and the water mixture is supplied to a floor heater (the terminal radiator in Patent Literature 2) as a heat demand portion.

Thus, it is premised that the opening degree of the thermal valve (the water quantity regulating valve in Patent Literature 2) is reduced, but when the opening degree of the thermal valve (the water quantity regulating valve in Patent Literature 2) is reduced, pressure loss of the entire system increases and the power of the pump increases.

In addition, in order to avoid the increase in pressure loss, it is necessary to change the rotation speed of the pump in response to the opening degree of the proportional control valve (the water quantity regulating valve in Patent Literature 2). Thus, there are many actuators to be controlled, and a control logic is complicated. Also, when there are many actuators to be controlled, the cost increases, and the possibility of a breakdown increases, which is a problem in reliability.

The present invention has been made in order to solve the problems described above, and an object of the present invention is to provide a multiple temperature system which simply achieves a configuration of supplying heat media having a plurality of different temperatures to a plurality of heat demand portions, at low cost, maintains reliability, and suppress an increase in pressure loss to achieve high energy saving performance.

### Solution to the Problem

A multiple temperature system according to the present invention is specified in claim 1.

### Advantageous Effects of the Invention

In the multiple temperature system according to the present invention, it is possible to simply achieve, at low cost, a configuration of supplying the heat medium at different predetermined temperatures to a plurality of heat demand portions, and to maintain reliability.

### Brief Description of the Drawings

- FIG. 1: is a circuit diagram schematically showing the configuration of a multiple temperature system according to Embodiment 1 of the present invention.
- FIG. 2: is a circuit diagram schematically showing the configuration of a multiple temperature system according to Embodiment 2 of the present invention.
- FIG. 3: is a circuit diagram schematically showing the configuration of a multiple temperature system according to Embodiment 3 of the present invention.
- FIG. 4: is a circuit diagram schematically showing the configuration of a multiple temperature system according to Embodiment 4 of the present invention.

### Description of Embodiments

Hereinafter, Embodiments of the present invention will be described with reference to the drawings.

### Embodiment 1

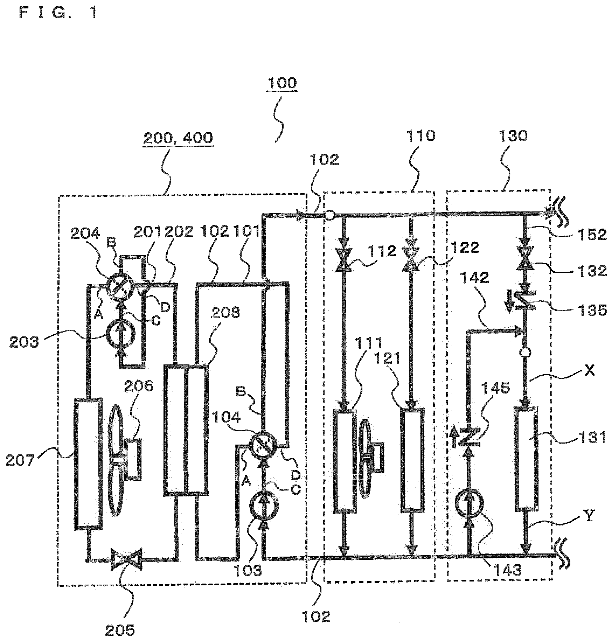

FIG. 1 is a circuit diagram schematically showing the configuration of a multiple temperature system 100 according to Embodiment 1.

The multiple temperature system 100 according to Embodiment 1 includes a heat pump mechanism 200 which is a heat supply portion 400, a first heat demand portion 110, and a second heat demand portion 130. The first heat demand portion 110 and the second heat demand portion 130 are connected in parallel, and the first heat demand portion 110 and the heat pump mechanism 200 are connected in series, and the second heat demand portion 130 and the heat pump mechanism 200 are connected in series, by a circulation passage 102.

### Configuration of Heat Pump Mechanism 200

In the heat pump mechanism 200, a compressor 203, a circulation switching valve 204, an outdoor air heat exchanger 207 including a fan 206, an expansion valve 205, and a heat supply heat exchanger 208 are mounted so as to be connected in series by a heat pump circulation passage 202 through which a heat pump heat medium 201 flows. In addition, a first circulation pump 103, a circulation switching valve 104, and the heat supply heat exchanger 208 are mounted so as to be connected in series by the circulation passage 102 through which a heat medium 101 flows.

### Compressor 203

The compressor 203 sucks the heat pump heat medium 201 and compresses the heat pump heat medium 201 into a high-temperature and high-pressure state. For example, the compressor 203 pressure-feeds the heat pump heat medium 201 which can be made into two-phase gas-liquid refrigerant in a range of use temperature and pressure, such as a hydrocarbon or carbon dioxide, in a gas phase state to make the heat pump heat medium 201 into high-temperature and high-pressure refrigerant.

### Circulation Switching Valves 104 and 204

The circulation switching valves 104 and 204 switch flows of the heat medium 101 and the heat pump heat medium 201. The circulation switching valves 104 and 204 are four-way valves, and four connection passages A, B, C, and D are connected thereto. The circulation switching valves 104 and 204 change circulating directions (flowing directions) of the heat medium 101 and the heat pump heat medium 201 by changing between a state in which the connection passages A and B communicate with each other and the connection passages C and D communicate with each other and a state in which the connection passages A and C communicate with each other and the connection passages B and D communicate with each other.

The circulation switching valve 204 changes the pressure-feeding direction of the compressor 203, that is, the circulating direction of the heat pump heat medium 201 in the heat pump circulation passage 202 such that the direction is different between during heating operation (heating the heat medium 101) and during cooling operation (cooling the heat medium 101). The circulating direction of the heat pump heat medium 201 during heating is opposite to that during cooling.

The circulation switching valve 104 changes the flowing direction of the heat medium 101 to the heat supply heat exchanger 208 such that the direction is different between during heating operation (supplying the heat medium 101 as heating energy to the first heat demand portion 110 and the second heat demand portion 130) and during cooling operation (supplying the heat medium 101 as cooling energy to the first heat demand portion 110 and the second heat demand portion 130).

In the heat supply heat exchanger 208, this is a mechanism for efficiently exchanging heat both during supply of heating energy and during supply of cooling energy such that the heat pump heat medium 201 and the heat medium 101 constantly cause contraflow. Thus, the supplying direction of the heat medium 101 to the first heat demand portion 110 during heating operation is the same as that during cooling operation.

### Expansion Valve 205

The expansion valve 205 reduces the pressure of the heat pump heat medium 201 to expand the heat pump heat medium 201. The expansion valve 205 expands the high-pressure liquid-phase heat pump heat medium 201 into a gas-liquid mixture phase to make the high-pressure liquid-phase heat pump heat medium 201 into a low-temperature and low-pressure medium.

### Outdoor Air Heat Exchanger 207

The outdoor air heat exchanger 207 serves as an evaporator (during heating operation) or a radiator (condenser) (during cooling operation) and exchanges heat between air supplied from the fan 206 and the heat pump heat medium 201 to evaporate and gasify or condense and liquefy the heat pump heat medium 201. The outdoor air heat exchanger 207 exchanges heat between outdoor air sent by the fan 206 and the heat pump heat medium 201.

### Heat Supply Heat Exchanger 208

The heat supply heat exchanger 208 serves as a radiator (condenser) (during heating operation) or an evaporator (during cooling operation) and exchanges heat between the heat media circulating through the two circulation passages (the circulation passage 102 and the heat pump circulation passage 202). That is, the heat supply heat exchanger 208 exchanges heat between the heat pump heat medium 201 which circulates through the heat pump circulation passage 202 and the heat medium 101 which circulates through the circulation passage 102 and is an antifreezing solution obtained by mixing glycerol or the like with water such that the solution does not solidifies until reaching a low temperature.

The heat supply heat exchanger 208 merely exchanges heat between the heat pump heat medium 201 and the heat medium 101 and is configured such that these media are not mixed. The heat medium 101 may not be the antifreezing solution and may be another medium. For example, if the heat medium 101 is water or the like, the heat medium 101 easily freezes, and thus more strict temperature management is required.

### First Circulation Pump 103

The first circulation pump 103 sucks the heat medium 101 from the first heat demand portion 110 and the second heat demand portion 130, pressurizes the heat medium 101, and circulates the heat medium 101 through the circulation passage 102.

### Operation within Heat Pump Mechanism 200

Hereinafter, an operation within the heat pump mechanism 200 during heating operation (heating the heat medium 101) will be described.

The gas-phase heat pump heat medium 201 made into a high-temperature and high-pressure medium by the compressor 203 is discharged from the compressor 203 and flows through the circulation switching valve 204 into the heat supply heat exchanger 208.

The gas-phase heat pump heat medium 201 exchanges heat with the heat medium 101 in the heat supply heat exchanger 208 to reject heat to be liquefied (heat is taken away by the heat medium 101), then is reduced in pressure by the expansion valve 205 to become a low-temperature and low-pressure gas-liquid mixture phase, and flows into the outdoor air heat exchanger 207.

The heat pump heat medium 201 exchanges heat with outdoor air supplied from the fan 206 in the outdoor air heat exchanger 207 to receive heat to be gasified (take away heat from the outdoor air), and then returns through the circulation switching valve 204 to the compressor 203.

Meanwhile, the heat medium 101 having received heat in the heat supply heat exchanger 208 is supplied through the circulation passage 102 to the first heat demand portion 110 and the second heat demand portion 130.

In heating the heat medium 101 (during heating operation), the high-temperature and high-pressure gas-phase heat pump heat medium 201 flows from the compressor 203 to the heat supply heat exchanger 208, and in cooling the heat medium 101 (during cooling operation), the low-temperature and low-pressure gas-liquid mixture phase heat pump heat medium 201 flows from the expansion valve 205 to the heat supply heat exchanger 208.

### Configuration of First Heat Demand Portion 110

In the first heat demand portion 110, a fan coil (indoor air-heat medium heat exchanger) 111 and a radiator (indoor air-heat medium heat exchanger) 121 are mounted so as to be connected in parallel. In addition, an on-off valve 112 is mounted between the circulation passage 102 and the fan coil 111 so as to be connected in series with the fan coil 111, and an on-off valve 122 is mounted between the circulation passage 102 and the radiator 121 so as to be connected in series with the radiator 121.

### Fan Coil 111

The fan coil 111 serves as a radiator (during heating operation) or a heat absorber (during cooling operation) and exchanges heat between indoor air supplied from a fan and the heat medium 101 to heat or cool the indoor air. Heat is exchanged between the indoor air and the heat medium 101 through forced convection by the fan.

### Radiator 121

The radiator 121 serves as a radiator and exchanges heat between indoor air and the heat medium 101 to heat the indoor air. Heat is exchanged between the indoor air and the heat medium 101 through natural convection. Here, the radiator 121 has been described as an example of the indoor air-heat medium heat exchanger, but a heat exchanger having a function as a heat absorber (during cooling operation) may be used.

### On-Off Valves 112 and 122

The on-off valves 112 and 122 switch between causing the heat medium 101 to fully flow therethrough and fully stopping the heat medium 101. When a ball valve is generally used as each on-off valve, it is possible to minimize pressure loss in causing the heat medium 101 to flow therethrough. In addition, each on-off valve is manually opened or closed to switch flowing of the heat medium 101 to the fan coil 111 or the radiator 121.

The on-off valve 112 may not be provided. In this case, it merely becomes impossible to stop flowing of the heat medium 101 to the fan coil 111. Moreover, similarly, the on-off valve 122 also may not be provided. In this case, it merely becomes impossible to stop flowing of the heat medium 101 to the radiator 121.

### Configuration of Second Heat Demand Portion 130

In the second heat demand portion 130, an on-off valve 132, a second check valve 135, and a floor heater 131 (indoor air-heat medium heat exchanger) are mounted so as to be connected in series by a branch passage 152 which is branched from the circulation passage 102.

In addition, a second circulation pump (return passage pump) 143 and a first check valve 145 are mounted so as to be connected in series by a return passage 142. The return passage 142 is a flow passage which joins the branch passage 152 between the second check valve 135 and the floor heater 131 in order to return part of the heat medium 101 from an outlet Y side of the floor heater 131 to an inlet X side of the floor heater 131.

### Floor Heater 131

Similarly to the fan coil 111 and the radiator 121, the floor heater 131 exchanges heat between indoor air and the heat medium 101 to heat the indoor air. If the floor heater 131 according to Embodiment 1 is configured to be supplied with the heat medium 101 cooled by the heat supply heat exchanger 208, it is possible to cause the floor heater 131 to have a cooling function.

However, if the floor heater 131 is used to exert a cooling function, desirably, a drainage channel is ensured such that condensed water from air does not stay on a floor or creation of a temperature difference between air and the heat medium 101 flowing through the floor heater 131 is suppressed, so that generation of condensed water is prevented as much as possible.

### On-Off Valve 132

Similarly to the on-off valves 112 and 122, the on-off valve 132 switches between causing the heat medium 101 to flow therethrough and stopping the heat medium 101. The on-off valve 132 is manually opened or closed to switch flowing of the heat medium 101 to the floor heater 131.

### First Check Valve 145 and Second Check Valve 135

The first check valve 145 and the second check valve 135 permit flow of the heat medium 101 only in one direction (the direction of an arrow) and restrain flow of the heat medium 101 in the opposite direction (the direction opposite to the direction of the arrow).

The first check valve 145 permits only flow of the return passage 142 from the outlet Y side of the floor heater 131 toward the inlet X side of the floor heater 131.

The second check valve 135 permits only flow of the branch passage 152 from the inlet X side of the floor heater 131 toward the outlet Y side of the floor heater 131.

### Second Circulation Pump 143

The second circulation pump 143 sucks the heat medium 101 from the outlet Y side of the floor heater 131, pressurizes the heat medium 101, and circulates the heat medium 101 to the inlet X side of the floor heater 131.

### Operation of Multiple Temperature System 100

Hereinafter, an operation of the multiple temperature system 100 during heating operation will be described.

The heat medium 101 receives heat in the heat supply heat exchanger 208 within the heat pump mechanism 200 to have a first temperature T₁ (e.g., 40 °C), and then is supplied through the circulation passage 102 to the first heat demand portion 110 and the second heat demand portion 130.

The rotation speed of the compressor 203 is changed to adjust the temperature of the heat pump heat medium 201 to adjust the quantity of heat exchanged in the heat supply heat exchanger 208, whereby it is possible to control the temperature of the heat medium 101 after heat exchange to the first temperature T₁.

The heat medium 101 having the first temperature T₁ (e.g., 40 °C) from the branch passage 152 and the heat medium 101 having rejected heat in the floor heater 131 to have a low temperature (e.g., 25 °C) from the return passage 142 join each other at the inlet X of the floor heater 131 and then are supplied to the floor heater 131.

At that time, the rotation speed of the second circulation pump 143 mounted on the return passage 142 is merely changed while the temperature of the heat medium 101 after the joining is detected by a temperature sensor which is not shown, whereby it is possible to control the heat medium 101 supplied to the floor heater 131, to a second temperature T₂ (e.g., 30 °C) and to supply the heat medium 101 to the floor heater 131 while the temperature is maintained.

At the above temperature, approximately, the heat medium 101 at 40 °C having a flow rate of 1 and the heat medium 101 at 25 °C having a flow rate of 2 (a flow rate which is double that of the heat medium 101 at 40 °C) join each other, whereby it is possible to supply the heat medium 101 at 30 °C having a flow rate of 3 (a flow rate which is three times that of the heat medium 101 at 40 °C), to the floor heater 131.

If the flow rate of the heat medium 101 that can be supplied to the floor heater 131 is 2 due to, for example, pressure loss, the heat medium 101 at 40 °C having a flow rate of 2/3 and the heat medium 101 at 25 °C having a flow rate of 4/3 join each other, whereby the heat medium 101 at 30 °C having a flow rate of 2 is supplied to the floor heater 131.

At that time, as compared to the case where: the second circulation pump 143 does not operate; the flow rate of the heat medium 101 in the return passage 142 is 0; and the flow rate of the heat medium 101 supplied to the floor heater 131 is 1, the flow rate of the heat medium 101 passing through the floor heater 131 increases from 1 to 2, and pressure loss increases.

However, the flow rate of the heat medium 101 in the branch passage 152 before the return passage 142 joins the branch passage 152 decreases from 1 to 2/3, and pressure loss decreases. Thus, the pressure loss in the entire branch passage 152 does not greatly change.

If the above is viewed from another angle, since the flow rate of the return passage 142 becomes 4/3 from 0, the flow rate to be supplied at 40 °C decreases from 1 to 2/3 accordingly. Thus, it is possible to achieve the same operation as in the related art in which the temperature is adjusted without controlling a supply amount by a regulating valve as in the related art.

In addition, if the above is viewed from still another angle, this means that it is possible to change the temperature to be supplied while the flow rate to pass through the floor heater 131 is kept constant. Thus, whereas, in the related art, due to control by the regulating valve, the flow rate to pass through the floor heater 131 changes, and a problem such as progress of corrosion or accumulation of impurities is likely to occur if the flow rate decreases; occurrence of such a problem is suppressed by so doing.

By adjusting only the rotation speed of the second circulation pump 143 to change a joining ratio between the branch passage 152 and the return passage 142 before joining, it is possible to control the temperature of the heat medium 101 supplied to the floor heater 131 after the joining, to any temperature therebetween.

When the on-off valve 132 is closed, the heat medium 101 having the first temperature T₁ is not supplied to the floor heater 131. Thus, the rotation speed of the second circulation pump 143 is decreased in order to attempt to maintain the second temperature T₂, but it is impossible to maintain the second temperature T₂ since no heat is supplied from the heat pump mechanism 200 (heat supply portion 400), and the second circulation pump 143 automatically stops later.

Also during cooling, similarly, it is possible to supply the heat medium 101 after joining, to the floor heater 131 while the heat medium 101 is maintained at the second temperature T₂ (e.g., 20 °C) higher than the first temperature T₁ (e.g., 15 °C) by adjusting only the rotation speed of the second circulation pump 143 mounted on the return passage 142.

Since the multiple temperature system 100 is configured as described above, only the second circulation pump 143 is sufficient as an actuator for controlling from the first temperature T₁ to the second temperature T₂, it is possible to minimize the number of components and the number of input/output points for temperature control, and it is possible to simply configure the multiple temperature system 100 at low cost.

By the second circulation pump 143 mounted on the return passage 142, supply of the heat medium 101 to the inlet X side of the floor heater 131 and suction of the heat medium 101 from the outlet Y side of the floor heater 131 are simultaneously performed. Thus, increase and decrease in pressure loss in the branch passage 152 having the inlet X and the outlet Y of the floor heater 131 are suppressed, and it is possible to minimize variation of power and the flow rate of the heat medium 101 circulating between the heat supply portion 400 and the second heat demand portion 130.

As a result, variation of the quantity of heat and the flow rate of the heat medium 101 supplied to each of the first heat demand portion 110 and the second heat demand portion 130 is suppressed, thus variation of the first temperature T₁ and the second temperature T₂ is also suppressed, and it is possible to suppress decrease in controllability and comfort which is caused by variation of flow rate, quantity of heat, and temperature.

Since it is possible to suppress increase and decrease in pressure loss in the branch passage 152, it is possible to circulate the heat medium 101 with low energy. In addition, even if the second circulation pump 143 breaks down, only control to the second temperature T₂ is made impossible, but it is possible to continue supply of the heat medium 101 from the heat supply portion 400 to the second heat demand portion 130, and thus it is possible to maintain minimum reliability of supplying heat to the second heat demand portion 130.

At that time, control to the second temperature T₂ based on the rotation speed of the second circulation pump 143 is impossible, but control to the first temperature T₁ is enabled by changing the rotation speed of the compressor 203 to adjust the quantity of heat exchanged in the heat supply heat exchanger 208. Thus, if the second circulation pump 143 breaks down, when control to the low first temperature T₁ is emergently performed, it is possible to reduce the temperature at the floor heater 131, and it is possible to avoid burn or the like.

Since the first check valve 145 is mounted on the return passage 142, during stop of the second circulation pump 143, it is possible to prevent backflow on the return passage 142 from the inlet X side of the floor heater 131 to the outlet Y side of the floor heater 131.

Therefore, when the temperature to be supplied to the floor heater 131 (when the second circulation pump 143 does not operate as a result of control due to the temperature being low), for example, immediately after startup of the multiple temperature system 100, it is possible to suppress flow of the heat medium 101 in which the heat medium 101 is not supplied to the floor heater 131 and returns to the heat supply portion 400, and thus it is possible to shorten the time taken to heat the floor heater 131.

Since the second check valve 135, which suppresses backflow of the heat medium 101, is mounted on the branch passage 152, it is possible to suppress backflow in the branch passage 152 from the outlet Y side of the floor heater 131 to the inlet X side of the floor heater 131. Therefore, even if loss of balance of the pressure or the flow rate in the entire heat demand portion, such as load variation, occurs, or the flow rate of the second circulation pump 143 greatly varies, it is possible to suppress variation of the temperature and the flow rate of the heat medium 101 to the first heat demand portion 110.

Since the on-off valve 132 is mounted, when supply of heat to the second heat demand portion 130 is unnecessary, it is possible to stop supply of the heat medium 101 to the second heat demand portion 130 by manually closing the on-off valve 132.

### Modifications of Embodiment 1

In Embodiment 1, the on-off valve 132 is manually opened and closed, but the on-off valve 132 may be automatically opened and closed by using a solenoid valve or the like, depending on whether the second heat demand portion 130 is necessary or unnecessary (e.g., the case where it is previously recognized that the second heat demand portion 130 is not used). In addition, similarly, the on-off valves 112 and 122 may be automatically opened and closed depending on whether the first heat demand portion 110 is necessary or unnecessary.

In Embodiment 1, the on-off valve 132 and the second check valve 135 are mounted at the inlet X side of the floor heater 131 on the branch passage 152, but may be mounted at the outlet Y side of the floor heater 131 on the branch passage 152.

In Embodiment 1, the first check valve 145 is mounted at the outlet side of the second circulation pump 143 on the return passage 142, but may be mounted at the inlet side of second circulation pump 143 on the return passage 142.

In Embodiment 1, the first check valve 145, the second check valve 135, and the on-off valve 132 are provided, but some or all of these valves may not be provided. When these valves are not provided, the advantageous effects achieved by provision of these valves are naturally not obtained, but the other advantageous effects are similarly obtained.

In Embodiment 1, the configuration in which the fan coil 111 and the radiator 121 are included as the first heat demand portion 110 and the configuration in which the floor heater 131 is included as the second heat demand portion 130 have been described. However, each of the fan coil 111, the radiator 121, and the floor heater 131 may be included in either one of the first heat demand portion 110 and the second heat demand portion 130.

In addition, the first heat demand portion 110 and the second heat demand portion 130 are not limited to the fan coil 111, the radiator 121, and the floor heater 131, and other components having the same function as that of these components, that is, a function to exchange heat between indoor air and the heat medium 101, may be included.

The above modifications may be applied to Embodiments below as necessary.

### Embodiment 2

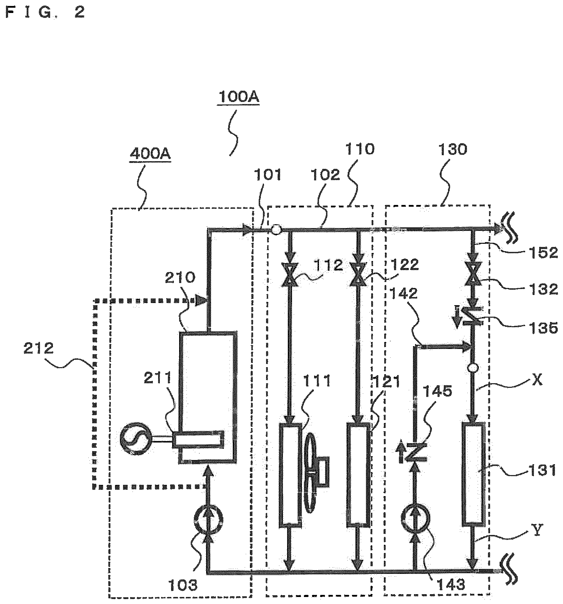

FIG. 2 is a circuit diagram schematically showing the configuration of a multiple temperature system 100A according to Embodiment 2 of the present invention.

Hereinafter, the difference from Embodiment 1 will be mainly described.

In Embodiment 1, the heat supply portion 400 is the heat pump mechanism 200, but in Embodiment 2, a heat supply portion 400A is a heat storage tank 210 including an electric heater 211. Thus, in the multiple temperature system 100A, only heating operation is assumed in which heating energy is supplied to the first heat demand portion 110 and the second heat demand portion 130.

The heat medium 101 which is heated to the first temperature T₁ by the electric heater 211 is stored in the heat storage tank 210. The heat medium 101 is supplied from the inlet side of the heat storage tank 210 through the circulation passage 102 to the first heat demand portion 110 and the second heat demand portion 130 by the first circulation pump (circulation passage pump) 103.

Then, the heat medium 101 is returned from the first heat demand portion 110 and the second heat demand portion 130 to the inlet side of the heat storage tank 210. The configurations of the first heat demand portion 110 and the second heat demand portion 130 are the same as in Embodiment 1, and the same advantageous effects are achieved.

### Modifications of Embodiment 2

A bypass passage 212 is formed so as to be branched from the flow passage at the inlet side of the heat storage tank 210 to cause the heat medium 101 to flow to the outlet side of the heat storage tank 210 without passing through the heat storage tank 210. A rotation speed-variable bypass pump or a regulating valve which is able to change the flow rate of the heat medium 101 flowing to the bypass passage 212 and the heat storage tank 210 is mounted on the bypass passage 212.

By so doing, even if the temperature of the heat medium 101 stored in the heat storage tank 210 is not the first temperature T₁, it is possible to supply the heat medium 101 at the first temperature T₁ to the first heat demand portion 110 and the second heat demand portion 130.

That is, the heat medium 101 is previously stored in the heat storage tank 210 at a temperature higher than the first temperature T₁, the temperature is lowered to the first temperature T₁ by adjusting and controlling a mixture ratio between the heat medium 101 from the heat storage tank 210 and the heat medium 101 from the bypass passage 212, and then it is possible to supply the heat medium 101 to the first heat demand portion 110 and the second heat demand portion 130. As a result, since the temperature is higher, it is possible to increase the quantity of heat which can be stored in the heat storage tank 210, or it is possible to decrease the volume of the heat storage tank 210.

### Embodiment 3

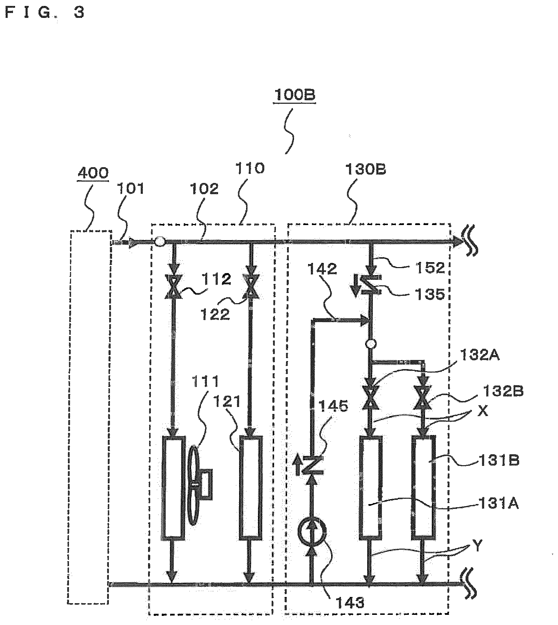

FIG. 3 is a circuit diagram schematically showing the configuration of a multiple temperature system 100B according to Embodiment 3 of the present invention.

Hereinafter, the difference from Embodiments 1 and 2 will be mainly described.

In Embodiment 1 or 2, the second heat demand portion 130 is only the floor heater 131, but in Embodiment 3, floor heaters 131A and 131B are included as a second heat demand portion 130B. In addition, in Embodiments 1 and 2, the on-off valve 132 is mounted on the branch passage 152 and at a position before the heat medium 101 from the return passage 142 joins the branch passage 152, but in Embodiment 3, on-off valves 132A and 132B are mounted on the branch passage 152 and at a position after the heat medium 101 from the return passage 142 joins the branch passage 152.

Moreover, the branch passage 152 is branched such that the on-off valve 132A and the floor heater 131A are connected in series, the on-off valve 132B and the floor heater 131B are connected in series, and these components are connected in parallel.

In the case of such a configuration, by adjusting the rotation speed of the second circulation pump 143, it is possible to supply the heat medium 101 at the second temperature T₂ to both of the floor heaters 131A and 131B. That is, it is possible to simultaneously supply the heat medium 101 at the same temperature to the floor heaters 131A and 131B.

If either one of the on-off valves 132A and 132B is closed, it is possible to supply the heat medium 101 at the second temperature T₂ to the floor heater (131A or 131B) that is connected in series with the opened on-off valve (132A or 132B).

If both of the on-off valves 132A and 132B are closed, this is the same as when the on-off valve 132 is closed in Embodiment 1 or 2. The other operation is the same as in Embodiment 1 or 2, and the same advantageous effects are achieved.

The on-off valve 132A may not be provided. In this case, it is made merely impossible to stop supply of the heat medium 101 to the floor heater 131A. In addition, similarly, the on-off valve 132B also may not be provided. In this case, it is made merely impossible to stop supply of the heat medium 101 to the floor heater 131B.

### Embodiment 4

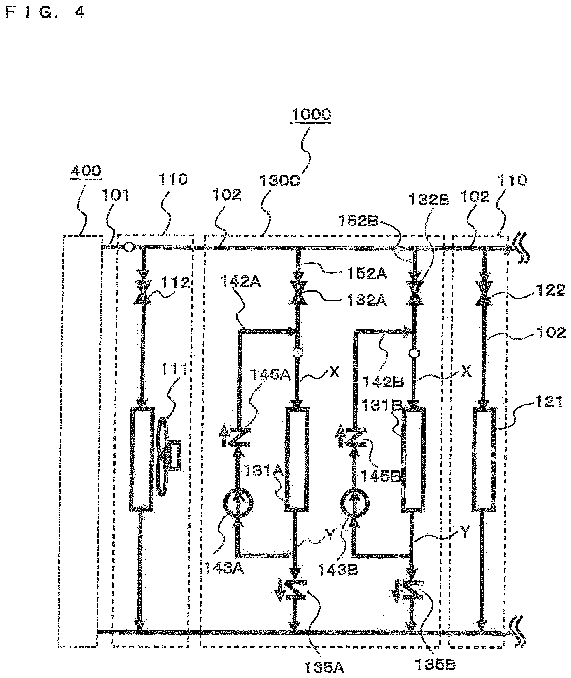

FIG. 4 is a circuit diagram schematically showing the configuration of a multiple temperature system 100C according to Embodiment 4 of the present invention.

Hereinafter, the difference from Embodiments 1 to 3 will be mainly described.

In Embodiments 1 to 3, in the second heat demand portion 130, the heat medium 101 at the second temperature T₂ which is one temperature, is supplied to the floor heater 131 (the floor heaters 131A and 131B in Embodiment 3). However, in Embodiment 4, in a second heat demand portion 130C, the heat medium 101 at second temperatures T_{2A} (a temperature to be supplied to the floor heater 131A) and T_{2B} (a temperature to be supplied to the floor heater 131B) which are two different temperatures, are supplied to the floor heaters 131A and 131B.

Thus, an on-off valve 132A, a second check valve 135A, and a floor heater 131A are mounted so as to be connected in series by a branch passage 152A from and to which a return passage 142A branches and joins, and an on-off valve 132B, a second check valve 135B, and a floor heater 131B are mounted so as to be connected in series by a branch passage 152B from and to which a return passage 142B branches and joins. The branch passages 152A and 152B are formed to branch from the circulation passage 102 so as to be in parallel with each other.

Regarding the position of the second check valve 135 which is mounted on the branch passage 152 at the inlet X side of the floor heater 131 in Embodiments 1 to 3, the second check valve 135A and 135B are mounted at the outlet Y sides of the floor heaters 131A and 131B and on the branch passage 152A and 152B after the return passages 142A and 142B branch therefrom, respectively.

In the case of such a configuration, by individually adjusting the rotation speed of a second circulation pump 143A on the return passage 142A corresponding to the floor heater 131A and the rotation speed of a second circulation pump 143B on the return passage 142B corresponding to the floor heater 131B, it is possible to control the heat medium 101 to be supplied to the floor heaters 131A and 131B, to the second temperatures T_{2A} and T_{2B} which are two different temperatures. The other operation is the same as in Embodiments 1 to 3, and the same advantageous effects are achieved.

### Modification of Embodiment 3 or 4

In Embodiment 3 or 4, as the second heat demand portion 130B or 130C, the two floor heaters 131A and 131B are included, but three or more floor heaters may be provided. In this case as well, the same advantageous effects are achieved.

### List of Reference Signs

- 100: multiple temperature system
- 100A: multiple temperature system
- 100B: multiple temperature system
- 100C: multiple temperature system
- 101: heat medium
- 102: circulation passage
- 103: first circulation pump
- 104: circulation switching valve
- 110: first heat demand portion
- 111: fan coil (first indoor heat exchanger)
- 112: on-off valve
- 121: radiator (first indoor air-heat medium heat exchanger)
- 122: on-off valve
- 130: second heat demand portion
- 130B: second heat demand portion
- 130C: second heat demand portion
- 131: floor heater (second indoor air-heat medium heat exchanger)
- 131A: floor heater (indoor air-heat medium heat exchanger)
- 131B: floor heater (indoor air-heat medium heat exchanger)
- 132: on-off valve
- 132A: on-off valve
- 132B: on-off valve
- 135: second check valve
- 135A: second check valve
- 135B: second check valve
- 142: return passage
- 142A: return passage
- 142B: return passage
- 143: second circulation pump
- 143A: second circulation pump
- 143B: second circulation pump
- 145: first check valve
- 145A: first check valve
- 145B: first check valve
- 152: branch passage
- 152A: branch passage
- 152B: branch passage
- 200: heat pump mechanism (heat supply portion)
- 201: heat pump heat medium
- 202: heat pump circulation passage
- 203: compressor
- 204: circulation switching valve
- 205: expansion valve
- 206: fan
- 207: outdoor air heat exchanger
- 208: heat supply heat exchanger
- 210: heat storage tank
- 211: electric heater
- 212: bypass passage
- 400: heat supply portion
- 400A: heat supply portion
- A: connection passage
- B: connection passage
- C: connection passage
- D: connection passage
- X: inlet (of floor heater)
- Y: outlet (of floor heater)

## Claims

1. A multiple temperature system comprising:
a heat supply portion (400) configured to supply heat as heating energy or cooling energy at a first temperature via a heat medium (101) circulating through a circulation passage (102);
a first heat demand portion (110) in which an on-off valve (122) and a first indoor air-heat medium heat exchanger (121) are connected in series by piping and to which heat is supplied via the heat medium (101); and
a second heat demand portion (130) in which a second indoor air-heat medium heat exchanger (131) is mounted on a branch passage (152) branched from the circulation passage (102) and to which heat is supplied via the heat medium (101),
wherein the first heat demand portion (110) and the second heat demand portion (130) are connected in parallel, the first heat demand portion (110) and the heat supply portion (400) are connected in series, and the second heat demand portion (130) and the heat supply portion (400) are connected in series, by the circulation passage (102), and
in the second heat demand portion (130),
a return passage (142) for returning the heat medium (101) from an outlet side of the second indoor air-heat medium heat exchanger (131) to an inlet side of the second indoor air-heat medium heat exchanger (131) is formed so as to be joined into the branch passage (152), and
a return passage pump (143) whose rotation speed is changeable by adjusting is mounted on the return passage (142),
the heat medium (101) at the outlet side of the second indoor air-heat medium heat exchanger (131) and the heat medium (101) at the first temperature are joined and the joined heat medium is supplied to the inlet side of the second indoor air-heat medium heat exchanger (131), and
**characterized in that**
the multiple temperature system is configured to perform a control such that the heat medium (101) supplied to the second indoor air-heat medium heat exchanger (13) is maintained at a desired second temperature which is lower than the first temperature when the heating energy is supplied from the heat supply portion (400) and which is higher than the first temperature when the cooling energy is supplied from the heat supply portion (400) by changing only the rotation speed of the return passage pump (143) through the adjusting to control a flow rate of the heat medium (101) on the return passage (142).

2. The multiple temperature system of claim 1,
wherein when the heat medium (101) is not supplied to the second heat demand portion (130), the rotation speed of the return passage pump (143) is decreased and the return passage pump (143) automatically stops later.

3. The multiple temperature system of claim 1 or 2,
wherein a first check valve (145) is mounted on the return passage (142).

4. The multiple temperature system of any one of claims 1 to 3,
wherein a second check valve (135) is mounted on the branch passage (152).

5. The multiple temperature system of any one of claims 1 to 4,
wherein an on-off valve (132) is mounted on the branch passage (152).

6. The multiple temperature system of any one of claims 1 to 5,
wherein in the heat supply portion (400), a compressor (203), an outdoor air heat exchanger (207), an expansion valve (205), and a heat supply heat exchanger (208) are connected by piping to form a refrigeration cycle, and
a circulation passage pump (103) and the heat supply heat exchanger (208) are connected in series by piping in the circulation passage (102).

7. The multiple temperature system of any one of claims 1 to 5,
wherein in the heat supply portion (400A), a circulation passage pump (103) and a heat storage tank (210) including an electric heater (211) are connected in series by piping.

8. The multiple temperature system of claim 7,
wherein in the heat supply portion (400A), a bypass passage (212) is formed so as to be branched from an inlet side of the heat storage tank (210) to cause the heat medium (101) to flow to an outlet side of the heat storage tank (210) without passing through the heat storage tank (210).

9. The multiple temperature system of any one of claims 1 to 8,
wherein in the second heat demand portion (130B), the branch passage (152) is branched into at least two or more passages, and
at least two or more second indoor air-heat medium heat exchangers (131A, 131B) are mounted in parallel thereon, and
wherein the branch passage (152) is branched at the inlet side of each of the second indoor air-heat medium heat exchangers (131A, 131B) with respect to a position after where the return passage (142) joins the branch passage (152).

10. The multiple temperature system of any one of claims 1 to 8,
wherein the second heat demand portion (130C) has at least two or more branch passages (152A, 152B), and
wherein the branch passages (152A, 152B) are branched from the circulation passage (102) so as to be in parallel to each other.

## Patentansprüche

1. Ein Mehrfachtemperatursystem, dass die folgenden Komponenten umfasst:
- einen Wärmezuleitungsabschnitt (400), der für die Zuleitung von Wärme als Heiz- oder Kühlenergie mit einer ersten Temperatur mittels eines Heizmediums (101) konfiguriert ist, das durch eine Zirkulationspassage (102) zirkuliert;
- einen ersten Wärmeanforderungsabschnitt (110), in dem ein Absperrventil (122) und ein erster Raumluft-Heizmedium-Wärmetauscher (121) durch Rohrleitungen in Reihe geschaltet sind und zu dem über das Heizmedium (101) Wärme geleitet wird; und einen zweiten Wärmeanforderungsabschnitt (130), in dem ein zweiter Raumluft-Heizmedium-Wärmetauscher (131) auf einer Abzweigpassage (152) montiert ist, die von der Zirkulationspassage (102) abzweigt und zu dem über das Heizmedium (101) Wärme geleitet wird,
wobei der erste Wärmeanforderungsabschnitt (110) und der zweite Wärmeanforderungsabschnitt (130) parallelgeschaltet sind, der erste Wärmeanforderungsabschnitt (110) und der Wärmezuleitungsabschnitt (400) in Reihe geschaltet sind, und der zweite Wärmeanforderungsabschnitt (130) und der Wärmezuleitungsabschnitt (400) in Reihe geschaltet sind, mittels der Zirkulationspassage (102), und
im zweiten Wärmeanforderungsabschnitt (130)
eine Rückführpassage (142) zur Rückführung des Heizmediums (101) von einer Auslassseite des zweiten Raumluft-Heizmedium-Wärmetauschers (131) zu einer Einlassseite des zweiten Raumluft-Heizmedium-Wärmetauschers (131) so gebildet wird, dass sie in die Abzweigpassage (152) führt, und
eine Rückführpassage-Pumpe (143), deren Rotationsgeschwindigkeit angepasst werden kann, an der Rückführpassage (142) montiert ist,
das Heizmedium (101) an der Auslassseite des zweiten Raumluft-Heizmedium-Wärmetauschers (131) und das Heizmedium (101) mit der ersten Temperatur zusammengeführt werden, und das zusammengeführte Heizmedium der Einlassseite des zweiten Raumluft-Heizmedium-Wärmetauschers (131) zugeleitet wird, und
das **dadurch gekennzeichnet ist, dass**
das Mehrfachtemperatursystem so konfiguriert ist, dass es steuert, dass das Heizmedium (101), das dem
zweiten Raumluft-Heizmedium-Wärmetauscher (131) zugeführt wird auf einer gewünschten zweiten Temperatur gehalten wird, die niedriger als die erste Temperatur ist, wenn die Heizenergie vom Wärmezuleitungsabschnitt (400) zugeleitet wird, und die höher als die erste Temperatur ist, wenn die Kühlenergie vom Wärmezuleitungsabschnitt (400) zugeleitet wird, indem nur die Rotationsgeschwindigkeit der Rückführpassage-Pumpe (143) angepasst wird, um eine Flussrate vom Heizmedium (101) in der Rückführpassage (142) zu steuern.

2. Das Mehrfachtemperatursystem aus Anspruch 1,
bei dem, wenn das Heizmedium (101) nicht dem zweiten Wärmeanforderungsabschnitt (130) zugeführt wird, die Rotationsgeschwindigkeit der Rückführpassage-Pumpe (143) vermindert wird und die Rückführpassage-Pumpe (143) später automatisch anhält.

3. Das Mehrfachtemperatursystem aus Anspruch 1 oder 2,
wobei ein erstes Rückschlagventil (145) an der Rückführpassage (142) montiert ist.

4. Das Mehrfachtemperatursystem aus einem der Ansprüche 1 bis 3,
wobei ein zweites Rückschlagventil (135) an der Abzweigpassage (152) montiert ist.

5. Das Mehrfachtemperatursystem aus einem der Ansprüche 1 bis 4,
wobei ein Absperrventil (132) an der Abzweigpassage (152) montiert ist.

6. Das Mehrfachtemperatursystem aus einem der Ansprüche 1 bis 5,
wobei im Wärmezuleitungsabschnitt (400) ein Kompressor (203), ein Außenluft-Wärmetauscher (207), ein Expansionsventil (205) und ein Wärmezuleitungs-Wärmetauscher (208) durch Rohrleitungen verbunden sind, um einen Kühlkreislauf zu bilden, und
eine Zirkulationspassage-Pumpe (103) und der Wärmezuleitungs-Wärmetauscher (208) in der Zirkulationspassage (102) durch Rohrleitungen in Reihe geschaltet sind.

7. Das Mehrfachtemperatursystem aus einem der Ansprüche 1 bis 5,
wobei im Wärmezuleitungsabschnitt (400A) eine Zirkulationspassage-Pumpe (103) und ein Wärmespeicher (210) einschließlich eines elektrischen Heizelements (211) durch Rohrleitungen in Reihe geschaltet sind.

8. Das Mehrfachtemperatursystem aus Anspruch 7,
wobei im Wärmezuleitungsabschnitt (400A) eine Umgehungspassage (212) gebildet wird, die von einer Einlassseite des Wärmespeichers (210) abzweigt, um das Heizmedium (101) zu einer Auslassseite des Wärmespeichers (210) fließen zu lassen, ohne durch den Wärmespeicher (210) zu fließen.

9. Das Mehrfachtemperatursystem aus einem der Ansprüche 1 bis 8,
wobei im zweiten Wärmeanforderungsabschnitt (130B) die Abzweigpassage (152) in mindestens zwei oder mehr Passagen abzweigt und mindestens zwei
oder mehr zweite Raumluft-Heizmedium-Wärmetauscher (131A, 131B) dazu parallel montiert sind, und
wobei die Abzweigpassage (152) an der Einlassseite jedes der zweiten Raumluft-Heizmedium-Wärmetauscher (131A, 131B) abzweigt, und zwar an einer Stelle nach dem Zusammentreffen der Rückführpassage (142) und der Abzweigpassage (152).

10. Das Mehrfachtemperatursystem aus einem der Ansprüche 1 bis 8,
wobei der zweite Wärmeanforderungsabschnitt (130C) mindestens zwei oder mehr Abzweigpassagen (152A, 152B) aufweist und
wobei die Abzweigpassagen (152A, 152B) von der Zirkulationspassage (102) abzweigen, so dass sie parallel zueinander verlaufen.

## Revendications

1. Système à températures multiples comprenant:
- une portion d'alimentation de chaleur (400) configurée pour alimenter de la chaleur à titre d'énergie de chauffe ou d'énergie de refroidissement à une première température avec un fluide thermique (101) circulant via un passage de circulation (102);
- une première portion de demande de chaleur (110) dans laquelle une vanne en tout-ou-rien (122) et un premier échangeur de chaleur intérieur air/fluide thermique (121) sont connectés en série par une tubulure et à laquelle de la chaleur est alimentée via le fluide thermique (101); et
- une seconde portion de demande de chaleur (130) dans laquelle un second échangeur de chaleur intérieur air/fluide thermique (131) est monté sur un passage ramifié (152) ramifié depuis le passage de circulation (102) et à laquelle de la chaleur est alimentée via le fluide thermique (101),
dans lequel la première portion de demande de chaleur (110) et la seconde portion de demande de chaleur (130) sont connectées en parallèle, la première portion de demande de chaleur (100) et la portion d'alimentation de chaleur (400) sont connectées en série, et la seconde portion de demande de chaleur (130) et la portion d'alimentation de chaleur (400) sont connectées en série, par le passage de circulation (102), et
dans la seconde portion de demande de chaleur (130),
un passage de retour (142) pour le retour du fluide thermique (101) depuis un côté sortie du second échangeur de chaleur intérieur air/fluide thermique (131) vers un côté d'entrée du second échangeur de chaleur intérieur air/fluide thermique (131) est formé de manière à être joint dans le passage ramifié (152), et
une pompe de passage de retour (143) dont la vitesse de rotation peut être changée par ajustement est montée sur le passage de retour (142),
le fluide thermique (101) sur le côté sortie du second échangeur de chaleur intérieur air/fluide thermique (131) et le fluide thermique (101) au niveau du fluide thermique joint à la première température est alimenté sur le côté entrée du second échangeur de chaleur intérieur air/fluide thermique (131), et
**caractérisé en ce que**
le système à multiples température est configuré pour exécuter une commande de telle façon que le fluide thermique (101) alimenté au second échangeur de chaleur intérieure air/fluide thermique (131) est maintenue à une seconde température désirée qui est plus basse que la première température quand l'énergie thermique est alimentée depuis la portion d'alimentation de chaleur (400), et qui est plus élevée que la première température lorsque l'énergie de refroidissement est alimentée depuis la portion d'alimentation de chaleur (400) en changeant uniquement la vitesse de rotation de la pompe de passage de retour (143) par ajustement pour commander un débit du fluide thermique (101) dans le passage de retour (142).

2. Système à températures multiples selon la revendication 1,
dans lequel quand le fluide thermique (101) n'est pas alimenté à la seconde portion de demande de chaleur (130), la vitesse de rotation de la pompe de passage de retour (143) est diminuée et la pompe de passage de retour (143) s'arrête automatiquement plus tard.

3. Système à températures multiples selon la revendication 1 ou 2,
dans lequel un premier clapet antiretour (145) est monté sur le passage de retour (142).

4. Système à températures multiples selon l'une quelconque des revendications 1 à 3,
dans lequel un second clapet antiretour (135) est monté sur le passage ramifié (152).

5. Système à températures multiples selon l'une quelconque des revendications 1 à 4,
dans lequel une vanne en tout-ou-rien (132) est montée sur le passage ramifié (152).

6. Système à températures multiples selon l'une quelconque des revendications 1 à 5,
dans lequel, dans la portion d'alimentation de chaleur (400), un compresseur (203), un échangeur de chaleur à air extérieur (207), une valve d'expansion (205), et un échangeur de chaleur à alimentation thermique (208) sont connectés par une tubulure pour former un cycle de réfrigération, et
une pompe de passage de circulation (103) et l'échangeur de chaleur à alimentation thermique (208) sont connectés en série par une tubulure dans le passage de circulation (102).

7. Système à températures multiples selon l'une quelconque des revendications 1 à 5,
dans lequel, dans la portion d'alimentation de chaleur (400), une pompe de passage de circulation (103) et un réservoir de stockage de chaleur (210) incluant un chauffage électrique (211) sont connectés en série par une tubulure.

8. Système à températures multiples selon la revendication 7,
dans lequel, dans la portion d'alimentation de chaleur (400A), un passage de by-pass (212) est formé de manière à être ramifié depuis un côté d'entrée du réservoir de stockage de chaleur (210) pour amener le fluide thermique (101) à s'écouler vers un côté de sortie du réservoir de stockage de chaleur (210) sans passer à travers le réservoir de stockage de chaleur (210).

9. Système à températures multiples selon l'une quelconque des revendications 1 à 8,
dans lequel, dans la seconde portion de demande de chaleur (130B), le passage ramifié (152) est ramifié en au moins deux ou plusieurs passages, et au moins deux ou plusieurs seconds échangeurs de chaleur intérieurs air/fluide thermique (131A, 131B) sont montés en parallèle sur ceux-ci, et
dans lequel le passage ramifié (152) et ramifié sur le côté d'entrée de chacun des seconds échangeurs de chaleur intérieurs air/fluide thermique (131A, 131B) par rapport à une position après laquelle le passage de retour (142) rejoint le passage ramifié (152).

10. Système à températures multiples selon l'une quelconque des revendications 1 à 8,
dans lequel la seconde portion de demande de chaleur (130C) comprend au moins deux ou plusieurs passages ramifiés (152A, 152B), et
dans lequel les passages ramifiés (152A, 152B) sont ramifiés depuis le passage de circulation (102) de manière à être parallèles les uns aux autres.
